Europäisches Patentamt

European Patent Office

Office européen des brevets

(19)

(11) **EP 0 955 351 A1**

(12) **EUROPEAN PATENT APPLICATION**

(43) Date of publication:
**10.11.1999 Bulletin 1999/45**

(21) Application number: **99106328.0**

(22) Date of filing: **26.03.1999**

(51) Int. Cl.[6]: **C10K 3/04**, B01D 53/62,
C01B 3/00, F02B 75/10,
F01N 3/10

(84) Designated Contracting States:
**AT BE CH CY DE DK ES FI FR GB GR IE IT LI LU
MC NL PT SE**
Designated Extension States:
**AL LT LV MK RO SI**

(30) Priority: **27.04.1998 JP 13458898**

(71) Applicant:
**TOYOTA JIDOSHA KABUSHIKı KAISHA
Aichi-ken 471-8571 (JP)**

(72) Inventor: **Aoyama, Satoshi**
**Toyota-shi, Aichi-ken 471-8571 (JP)**

(74) Representative:
**Leson, Thomas Johannes Alois, Dipl.-Ing. et al**
**Patentanwälte**
**Tiedtke-Bühling-Kinne & Partner,**
**Bavariaring 4**
**80336 München (DE)**

(54) **Carbon monoxide concentration reducing apparatus and method, and production method
for carbon monoxide-selective oxidation catalyst**

(57) The activity of a carbon monoxide-selective oxidation catalyst is increased, and the temperature range in which the catalyst activity for facilitating a carbon monoxide-selective oxidation becomes sufficiently high is expanded. A CO-selective oxidation unit(34) contains carbon monoxide-selective oxidation catalysts having catalyst metals including platinum and ruthenium. The interior of the unit(34) is divided into a plurality of regions(A1, A2, A3, A4, A5, A6, A7). An upstream-end region(A1) has only ruthenium as a catalyst metal. A downstream-end region(A7) has only platinum as a catalyst metal. In intermediate regions(A2, A3, A4, A5, A6) between these regions, platinum and ruthenium as catalyst metals are present in mixed states. The ruthenium proportion becomes higher toward the upstream-end region(A1). Therefore, the temperature range in which the activity for facilitating the CO-selective oxidation becomes sufficiently high also becomes higher toward the upstream-end region(A1) in the CO-selective oxidation unit(34).

**FIG. 1**

EP 0 955 351 A1

**Description**

BACKGROUND OF THE INVENTION

1. Field of Invention

The present invention relates to a carbon monoxide concentration reducing apparatus and a carbon monoxide concentration reducing method for reducing the carbon monoxide concentration in a hydrogen-rich gas containing carbon monoxide, and to a production method for a carbon monoxide-selective oxidation catalyst.

2. Description of Related Art

In a fuel cell system, a carbon monoxide concentration reducing apparatus for reducing the carbon monoxide concentration in a hydrogen-rich gas is used to reduce the carbon monoxide concentration in a fuel gas to be supplied to the fuel cells. Each fuel cell is supplied with the fuel gas containing hydrogen and an oxygen-containing oxidative gas, and obtains an electromotive force through the following electrochemical reactions.

$$H_2 \rightarrow 2H^+ + 2e^- \tag{1}$$

$$2H^+ + 2e^- + 1/2\ O_2 \rightarrow H_2O \tag{2}$$

$$H_2 + 1/2\ O_2 \rightarrow H_2O \tag{3}$$

Equation (1) expresses a reaction occurring at the anode. Equation (2) expresses a reaction occurring at the cathode. Equation (3) expresses a reaction occurring in the entire fuel cell. In such fuel cells, the concentration of carbon monoxide present in a supplied gas greatly affects the fuel cell performance. Normally, there is no possibility that the oxidative gas contains an amount of carbon monoxide that can reduce the catalyst function since the oxidative gas normally used is air or the like. However, if a hydrogen-rich gas obtained by reforming a hydrocarbon material fuel is used as a fuel gas, carbon monoxide is generated in the reforming process, so that the carbon monoxide concentration is required to be reduced to a predetermined concentration. If carbon monoxide is present in the fuel gas supplied to a fuel cell, carbon monoxide adsorbs to a platinum catalyst provided in the fuel cell and degrades the catalyst function thereof, so that the hydrogen decomposition at the side of the anode may be inhibited and therefore the fuel cell performance may deteriorate. To describe how carbon monoxide is generated in the reforming process, a water vapor reforming reaction using methanol as a material fuel is indicated below.

$$CH_3OH \rightarrow CO + 2H_2 \tag{4}$$

$$CO + H_2O \rightarrow CO_2 + H_2 \tag{5}$$

$$CH_3OH + H_2O \rightarrow 3H_2 + CO_2 \tag{6}$$

The water vapor reforming reaction of methanol is considered to occur as follows. That is, the methanol decomposing reaction indicated by equation (4) and the reaction indicated by equation (5) progress simultaneously, so that the reaction indicated by equation (6) occurs as a whole to produce a hydrogen-rich gas containing carbon dioxide. If this reaction completely progresses, no carbon monoxide remains after the reaction. In reality, however, it is difficult to cause complete progress of the reaction (5) in the reforming reaction. Therefore, the fuel gas reformed by a fuel reforming device normally contains a small amount of carbon monoxide as a by-product.

Therefore, according to the conventional art, before a fuel gas is supplied to a fuel cell, the carbon monoxide concentration in the fuel gas is reduced through a carbon monoxide-selective oxidation in which carbon monoxide is oxidized in preference to hydrogen. More specifically, a hydrogen-rich gas produced through the reforming reaction is supplied to a carbon monoxide concentration reducing apparatus equipped with a carbon monoxide-selective oxidation catalyst that facilitates the carbon monoxide-selective oxidation, whereby the carbon monoxide concentration is reduced. Then, a hydrogen-rich gas from the apparatus is supplied as a fuel gas to the fuel cell. The oxidizing reaction of carbon monoxide that occurs in the carbon monoxide concentration reducing apparatus is expressed by equation (7) below. The carbon monoxide concentration allowable in the fuel gas supplied to the fuel cell is at most about several tens of parts per million (ppm) in the case of phosphoric acid fuel cells, and at most about several ppm in the case of polymer electrolyte fuel cells.

$$CO + (1/2)O_2 \rightarrow CO_2 \qquad\qquad (7)$$

As a catalyst that facilitates the aforementioned carbon monoxide-selective oxidation, a platinum-ruthenium alloy catalyst (Pt-Ru alloy catalyst) is proposed in, for example, Japanese Patent Application Laid-open No. HEI 9-30802. The Pt-Ru alloy catalyst is an excellent carbon monoxide-selective oxidation catalyst that maintains a sufficiently high activity to facilitate the carbon monoxide-selective oxidation in a wider temperature range and that is able to effectively reduce the carbon monoxide concentration even in a hydrogen-rich gas containing methanol, that is, a material fuel.

If a fuel cell system is to be used as a drive power source for an electric vehicle, a size reduction of the cell is required since the installation space therefor is limited. Therefore, the carbon monoxide concentration reducing apparatus incorporated in a fuel cell system also needs to be reduced in size. For a size reduction of the apparatus, it is conceivable to increase the activity of the carbon monoxide-selective oxidation catalyst for facilitating the carbon monoxide-selective oxidation. If the catalyst activity is increased, the flow rate of gas that can be processed by the catalyst per unit volume increases, so that the amount of the catalyst required to process a predetermined amount of gas decreases. Therefore, it becomes possible to reduce the size of the carbon monoxide concentration reducing apparatus.

The size reduction of the carbon monoxide concentration reducing apparatus also depends on the width of the temperature range in which the catalyst becomes able to sufficiently facilitate the carbon monoxide-selective oxidation. The carbon monoxide concentration reducing apparatus is supplied with a high-temperature, hydrogen-rich gas produced through the aforementioned reforming reaction. After a reduction in the carbon monoxide concentration in the gas, the apparatus supplies the fuel gas to fuel cells, whose operating temperature is lower than the reaction temperature of the reforming reaction. Normally, the reaction temperature of the reforming reaction is higher than the reaction temperature of the carbon monoxide-selective oxidation, which is higher than the operating temperature of the fuel cells. Therefore, the temperature of the hydrogen-rich gas produced through the reforming reaction needs to be reduced to a temperature range in which the catalyst activity for facilitating the carbon monoxide-selective oxidation becomes sufficiently high, before the hydrogen-rich gas is supplied to the carbon monoxide concentration reducing apparatus. After the carbon monoxide concentration is reduced, the temperature of the fuel gas needs to be reduced to a temperature that matches or approximately equals the operating temperature of the fuel cells. Given a sufficiently wide temperature range in which the catalyst activity for facilitating the carbon monoxide-selective oxidation becomes sufficiently high, it becomes unnecessary to provide a special device for decreasing the temperature of the hydrogen-rich gas produced through the reforming reaction, before supplying the gas to the carbon monoxide concentration reducing apparatus. Furthermore, given a sufficiently wide temperature range in which the catalyst activity for facilitating the carbon monoxide-selective oxidation becomes sufficiently high, it becomes possible to maintain a sufficiently high catalyst activity for the carbon monoxide-selective oxidation in the carbon monoxide concentration reducing apparatus as a whole while controlling the internal temperature of the apparatus so that the temperature of the fuel gas to be discharged from the apparatus decreases to a temperature that matches the operating temperature of the fuel cells. The provision of a device for decreasing the temperature of the fuel gas in which the carbon monoxide concentration has been reduced also becomes unnecessary. Therefore, with regard to the carbon monoxide-selective oxidation catalyst, there have been demands for a further improvement in the carbon monoxide-selective oxidation facilitating activity and a further increase in the temperature range in which the catalyst becomes able to sufficiently facilitate the carbon monoxide-selective oxidation.

SUMMARY OF THE INVENTION

Accordingly, it is an object of the present invention to provide a carbon monoxide concentration reducing apparatus, a carbon monoxide concentration reducing method and a production method for a carbon monoxide-selective oxidation catalyst which solve the aforementioned problems of the related art, that is, improve the carbon monoxide-selective oxidation catalyst activity and expand the temperature range in which the carbon monoxide-selective oxidation facilitating activity becomes sufficiently high.

According to one aspect of the invention, there is provided a carbon monoxide concentration reducing apparatus that receives a hydrogen-rich gas containing carbon monoxide, and reduces a carbon monoxide concentration by a selective oxidation in which carbon monoxide is selectively oxidized, and then discharges a hydrogen-rich gas in which the carbon monoxide concentration has been reduced, the apparatus including a carbon monoxide-selective oxidation catalyst that facilitates the selective oxidation, the carbon monoxide-selective oxidation catalyst including a first catalyst metal and a second catalyst metal that have different active temperature ranges, the carbon monoxide-selective oxidation catalyst having an active temperature range that is intermediate relative to the active temperature range of the first catalyst metal and the active temperature range of the second catalyst metal that are exhibited individually by the first catalyst metal and the second catalyst metal, wherein a mixture ratio between the first catalyst metal and the second catalyst metal is set on the basis of a pre-set temperature of the carbon monoxide-selective oxidation catalyst.

In this carbon monoxide concentration reducing apparatus, the mixture ratio between the first and second catalyst metals is determined on the basis of a catalyst temperature pre-set for the carbon monoxide-selective oxidation catalyst, in which the first and second catalyst metals are present in a mixed state. The first and second catalyst metals have activity for facilitating the selective oxidation in which carbon monoxide is selectively oxidized, and have different active temperature ranges in which the catalyst activity becomes higher than a predetermined level. If the first and second catalyst metals are present in a mixed state, the active temperature range in the mixed region is intermediate relative to the active temperature range of the first catalyst metal and the active temperature range of the second catalyst metal that are exhibited individually by the first catalyst metal and the second catalyst metal, and the active temperature range in the mixed region corresponds to the mixture ratio in the region. Therefore, if a mixed state of the first and second catalyst metals in the carbon monoxide-selective oxidation catalyst incorporated in the carbon monoxide concentration reducing apparatus is determined in accordance with the operating temperature distribution in the interior of the apparatus under an operating condition that is pre-set for the carbon monoxide concentration reducing apparatus, the carbon monoxide-selective oxidation can be caused to progress by high catalyst activity by operating the carbon monoxide concentration reducing apparatus in accordance with the pre-set operating condition. Thus, the carbon monoxide concentration in the hydrogen-rich gas can be sufficiently reduced.

In embodiments of the invention, a desirable temperature distribution in the carbon monoxide concentration reducing apparatus can be estimated on the basis of at least one of the temperature of the hydrogen-rich gas supplied to the apparatus, the amount of heat produced by the selective oxidation under steady state conditions, and the operating temperature of an apparatus to which the hydrogen-rich gas discharged from the carbon monoxide concentration reducing portion is supplied.

In the carbon monoxide concentration reducing apparatus of the invention, the first catalyst metal and the second catalyst metal may be platinum (Pt) and ruthenium (Ru), respectively. The active temperature range of platinum is about 70-80°C and the active temperature range of ruthenium is about 160-180°C. Therefore, by adjusting the mixture ratio between platinum and ruthenium, a desired active temperature of the carbon monoxide-selective oxidation catalyst can be set within the temperature range of about 70-180°C.

Thus, this invention provides the unexpected discovery that the active temperature range of the carbon monoxide-selective oxidation catalyst including first and second catalyst metals such as platinum and ruthenium, is intermediate relative to the active temperature range of the first catalyst metal and the second catalyst metal, respectively, when the first and second catalyst metals are mixed together to form the carbon monoxide-selective oxidation catalyst.

Furthermore, the carbon monoxide-selective oxidation catalyst may be a non-alloyed catalyst. That is, it is also possible to provide the first and second catalyst metals in a mixed state without alloying the catalyst metals. Omission of the process of alloying the catalyst metals eliminates the danger of increasing the particle size of the first and second catalyst metals, and ensures that a sufficiently large total catalyst surface area will be obtained.

Furthermore, the first and second catalyst metals may have a particle size within a range of about 0.5 nm to about 2 nm. This particle size range ensures a sufficiently large total surface area of the carbon monoxide-selective oxidation catalyst, and makes it possible to sufficiently increase the amount of gas that can be processed per unit volume of the catalyst (that is, such an amount of the hydrogen-rich gas that only the carbon monoxide concentration will be reduced). As a result, the amount of catalyst required to process a predetermined amount of gas is reduced, so that the carbon monoxide concentration reducing method can be reduced in size.

In embodiments, the carbon monoxide concentration reducing apparatus may further have a construction as follows. That is, the mixture ratio between the first catalyst metal and the second catalyst metal varies between an upstream-side region where the hydrogen-rich gas is supplied and a downstream-side region where the hydrogen-rich gas is discharged, and the active temperature range is higher in the upstream-side region than in the downstream-side region.

This construction allows the carbon monoxide-selective oxidation to sufficiently progress in the upstream-side region even in a case where the hydrogen-rich gas heated to a predetermined temperature is supplied to the carbon monoxide concentration reducing apparatus or the carbon monoxide concentration reducing portion. Furthermore, temperature control may be performed such that the temperature becomes lower at the downstream side than at the upstream side. With this control, the carbon monoxide-selective oxidation can be caused to progress sufficiently in the downstream-side region.

Still further, in embodiments of the carbon monoxide concentration reducing apparatus, a proportion of the second catalyst metal to the first catalyst metal may be higher at the upstream side than at the downstream side. For example, if the first catalyst metal is platinum (Pt) and the second catalyst metal is ruthenium (Ru), an increased Ru proportion in the upstream-side region allows the carbon monoxide-selective oxidation to progress by sufficiently high catalyst activity in the upstream-side region, even in a case where the temperature of hydrogen-rich gas and the oxidative gas supplied thereto is as high as 180°. An increased Pt proportion in the downstream-side region allows the carbon monoxide-selective oxidation to progress by sufficiently high catalyst activity in the downstream-side region, even in a case where the temperature of the hydrogen-rich gas to be discharged becomes as low as 70°C.

BRIEF DESCRIPTION OF THE DRAWINGS

The foregoing and further objects, features and advantages of the present invention will become apparent from the following description of preferred embodiments with reference to the accompanying drawings, wherein like numerals are used to represent like elements and wherein:

Fig. 1 is a schematic block diagram of the construction of a fuel cell system according to a preferred embodiment of the invention;
Fig. 2 is a schematic sectional view of a unit cell in a fuel cell shown in Fig. 1;
Fig. 3 illustrates the construction of a CO-selective oxidation unit; and
Fig. 4 is a flowchart illustrating a production method for a CO-selective oxidation catalyst.

DETAILED DESCRIPTION OF PREFERRED EMBODIMENTS

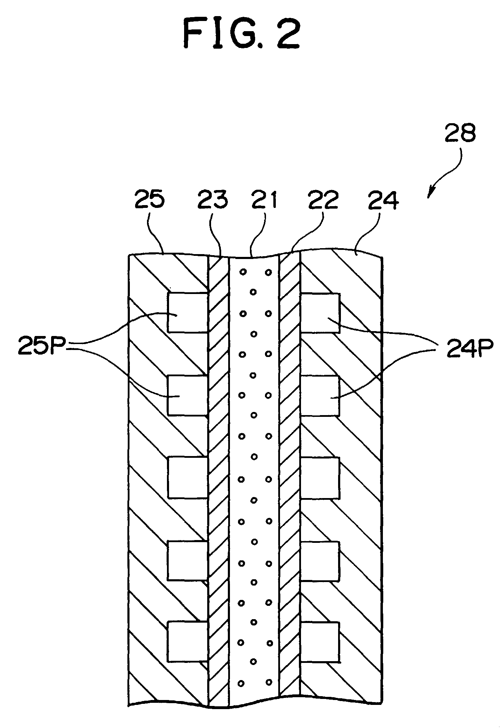

Preferred embodiments of the present invention will be described in detail hereinafter with reference to the accompanying drawings.

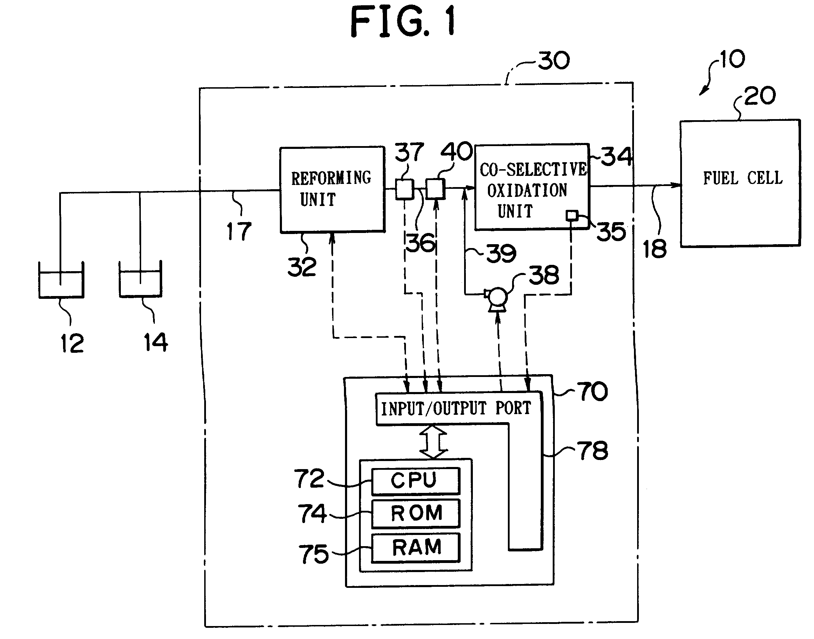

Fig. 1 is a schematic block diagram of the construction of a fuel cell system 10 according to a preferred embodiment of the invention. As shown in Fig. 1, the fuel cell system 10 includes a methanol tank 12, a water tank 14, a fuel reformer 30, and a fuel cell 20, as main components. The overall construction of the fuel cell system 10 will first be described below.
The methanol tank 12 and the water tank 14 store methanol and water, respectively, and supply them to the fuel reformer 30 via a material fuel supply passage 17. The fuel reformer 30 produces a fuel gas containing hydrogen, from methanol and water supplied thereto. The fuel cell 20, supplied with the fuel gas from the fuel reformer 30 and an oxidative gas containing oxygen, conducts an electrochemical reaction to produce an electromotive force.
The fuel cell 20 is a polymer electrolyte fuel cell formed by stacking a plurality of unit cells 28. Fig. 2 is a schematic sectional view of a unit cell 28. As shown in Fig. 2, each unit cell 28 comprises an electrolyte membrane 21, an anode 22, a cathode 23, and separators 24, 25.
The anode 22 and the cathode 23 are gas diffusion electrodes disposed on opposite sides of the electrolyte membrane 21, thus forming a sandwich structure. The separators 24, 25 are disposed on the opposite sides of the sandwich structure so that passages for the fuel gas and the oxidative gas are defined between the separator 24 and the anode 22 and between the separator 25 and the cathode 23. More specifically, the anode 22 and the separator 24 define fuel gas passages 24P therebetween, and the cathode 23 and the separator 25 define oxidative gas passages 25P therebetween.
The electrolyte membrane 21 is a proton-conductive ion exchange membrane formed from a solid polymer material, for example, a fluorine-based resin. The electrolyte membrane 21 exhibits good electric conductivity when it is wet, in this embodiment, a Nafion membrane (by Du Pont) is used for the electrolyte membrane 21. Platinum, or an alloy of platinum and another metal, is provided, as a catalyst, on a surface of the electrolyte membrane 21. The anode 22 and the cathode 23 are formed from carbon cloths produced by weaving carbon filaments. The anode 22 and the cathode 23 may also be formed from a carbon felt or a carbon paper formed of carbon fiber or filaments.
The separators 24, 25 are formed from a gas-impermeable electrically conductive material, for example, a dense carbon material that has been made gas-impermeable by compressing a carbon material. The separators 24, 25 have predetermined-shape rib portions on their surfaces. Therefore, the separator 24 defines, together with the surface of the anode 22, the fuel gas passages 24P as mentioned above. The separator 25 defines, together with the surface of the cathode 23, the oxidative gas passages 25P. The shape of the rib portions formed on the surface of each separator is not particularly restricted, as long as the rib portions partially define the gas passages that allow the fuel gas or the oxidative gas to be supplied to the corresponding gas diffusion electrode. In this embodiment, the rib portions have a plurality of ribs and grooves extending parallel to each other.
Although in Fig. 2, the separator 24 partially defining the fuel gas passages 24P and the separator 25 partially defining the oxidative gas passages 25P are separate members, it is also possible to use a separator that has rib portions on opposite sides thereof so that the fuel gas passages 24P and the oxidative gas passages 25P are formed on the opposite sides of the separator. In this construction, the separator is shared by adjacent unit cells 28.
A unit cell 28, that is, a unit structure of the fuel cell 20, has a construction described above. When the fuel cell 20 is assembled, a plurality of groups of unit cells 28 (100 groups in this embodiment) are formed by disposing separators between component structures each composed of the anode 22, the electrolyte membrane 21 and the cathode 23, and disposing collector plates formed from dense carbon members or steel plates, on opposite ends of the assembly. The fuel cell 20 thus has a stacked structure.
Although Fig. 1 shows a fuel gas supply apparatus for supplying the fuel gas to the anode side of the fuel cell 20, an oxidative gas supply apparatus (not shown) is connected to the cathode side of the fuel cell 20. The oxidative gas supply apparatus supplies pressurized air to the fuel cell 20. Furthermore, the fuel cell 20 is connected to a fuel gas discharge apparatus (not shown) and an oxidative gas discharge apparatus (not shown), whereby after the electrochemical reactions occur at the electrodes, waste fuel gas and waste oxidative gas are discharged out of the fuel cell 20.

The fuel reformer 30 will now be described. The fuel reformer 30 is mainly composed of a reforming unit 32, a CO-selective oxidation unit 34, a gas flow sensor 37, a carbon monoxide sensor 40, a blower 38, and a control unit 70. The reforming unit 32 is supplied with methanol and water, and produces therefrom a reformed gas that is rich in hydrogen. The CO-selective oxidation unit 34 selectively oxidizes carbon monoxide contained in the reformed gas and thereby reduces the carbon monoxide concentration in the reformed gas. As a result, a fuel gas in which the carbon monoxide concentration is equal to or lower than a predetermined value is produced. The gas flow sensor 37 and the carbon monoxide sensor 40 detect the flow of the reformed gas and the carbon monoxide concentration in the reformed gas, respectively. The blower 38 introduces an oxygen-containing oxidative gas (air in this embodiment) into a reformed gas supply passage 36, via an introducing pipe 39 connected to the reformed gas supply passage 36, downstream of the gas flow sensor 37 and the carbon monoxide sensor 40. The control unit 70 controls the operating conditions of various units and portions of the fuel reformer 30. The component units of the fuel reformer 30 will be described in detail below.

The reforming unit 32 is supplied with methanol from the methanol tank 12 and water from the water tank 14, and produces a reformed gas containing hydrogen and carbon dioxide through the reactions expressed by equations (4) and (5). Since it is difficult to cause the complete progress of the reaction expressed by equation (5) in actual practice as stated above, carbon monoxide typically remains as a by-product in the reformed gas produced by the reforming unit 32. The carbon monoxide concentration in the reformed gas is dependent on the kind of catalyst contained in the reforming unit 32, the operating temperature of the reforming unit 32, the supply flow (that is, space velocity) of methanol and water supplied to the reforming unit 32 per unit volume of the catalyst, and the like. In this embodiment, a Cu-Zn catalyst is used as the catalyst contained in the reforming unit 32.

The Cu-Zn catalyst is a catalyst formed from metal oxides produced through coprecipitation. In this embodiment, the Cu-Zn catalyst is in the form of tablets of 1/8 inch in diameter. The reforming unit 32 is filled with the Cu-Zn catalyst. Methanol and water are supplied via the material fuel supply passage 17, and vaporized by a vaporizer(not shown) disposed upstream of the reforming unit 32, and then introduced into the reforming unit 32 as a material fuel gas. After being introduced into the reforming unit 32, the material fuel gas contacts the aforementioned reforming catalyst. On surfaces of the reforming catalyst, the reforming reactions occur. With the progress of the reactions, hydrogen and carbon dioxide are produced. Thus, a reformed gas rich in hydrogen flows into the reformed gas supply passage 36.

The water vapor reforming reaction of methanol conducted in the reforming unit 32 is an endothermic reaction as a whole (equation (6)). Therefore, in order to provide an amount of heat required for the reaction, the reforming unit 32 is equipped with a burner unit (not shown). The burner unit is supplied with, as a combustion fuel, methanol from the methanol tank 12 and waste fuel gas discharged from the fuel cell 20 after the electrochemical reaction. By controlling the amounts of methanol and waste fuel gas supplied to the burner unit, the operating temperature of the reforming unit 32 is kept within the range of from about 220°C to about 300°C. The reforming unit 32 is connected to the control unit 70 by predetermined electrically conductive lines. The control unit 70 controls the amounts of waste fuel gas and methanol supplied to the burner unit, and the amounts of methanol and water supplied to the reforming unit 32 via the vaporizer.

The CO-selective oxidation unit 34 is supplied with the reformed gas from the reforming unit 32 and the oxidative gas, and oxidizes carbon monoxide in the reformed gas in preference to hydrogen, thereby producing a fuel gas in which the carbon monoxide concentration is reduced. The fuel gas is supplied to the fuel cell 20 via a fuel gas supply passage 18. The CO-selective oxidation unit 34 contains alumina pellets loaded with a Pt-Ru alloy catalyst, that is, a CO-selective oxidation catalyst, and a Pt catalyst and a Ru catalyst. The carbon monoxide concentration in the fuel gas obtained by passing the reformed gas through the CO-selective oxidation unit 34 is dependent on the kind of catalyst contained in the CO-selective oxidation unit 34, the operating temperature of the CO-selective oxidation unit 34, the carbon monoxide concentration in the reformed gas supplied to the CO-selective oxidation unit 34, the flow (space velocity) of the reformed gas supplied to the CO-selective oxidation unit 34 per unit catalyst volume, and the like.

The carbon monoxide sensor 40 is disposed in the reformed gas supply passage 36, which supplies the reformed gas from the reforming unit 32 to the CO-selective oxidation unit 34. The carbon monoxide sensor 40 detects the carbon monoxide concentration in the reformed gas to be supplied to the CO-selective oxidation unit 34. Similar to the fuel cell 20, the carbon monoxide sensor 40 has a solid polymer electrolyte membrane and a pair of electrode sandwiching the electrolyte membrane. One side surface of the electrolyte membrane is exposed to the hydrogen-rich reformed gas for measurement of the carbon monoxide concentration, and the other side surface of the electrolyte membrane is exposed to the atmosphere. By measuring the electromotive force produced between the pair of electrodes sandwiching the electrolyte membrane, the carbon monoxide concentration in the reformed gas is detected. That is, the construction of the carbon monoxide sensor 40 is substantially the same as that of each unit cell 28 of the polymer electrolyte fuel cell. If carbon monoxide is present in the reformed gas supplied to the carbon monoxide sensor 40, the electromotive force produced between the pair of electrodes sandwiching the electrolyte membrane decreases since carbon monoxide poisons the catalyst. The decrease in the electromotive force becomes greater as the carbon monoxide concentration increases. Therefore, if the relationship between the carbon monoxide concentration in the reformed gas supplied to the carbon monoxide sensor 40 and the electromotive force occurring in the carbon monoxide sensor 40 is found and the data regarding the relationship is pre-stored in a storage location (for example, the control unit 70), the carbon monoxide concentration in the reformed gas can be detected by comparing a measured electromotive force that occurs in the carbon monoxide sensor 40 with the stored data.

The reformed gas supply passage 36 is provided with the gas flow sensor 37, in addition to the carbon monoxide sensor 40. The gas flow sensor 37 detects the flow of the reformed gas supplied to the CO-selective oxidation unit 34 via the reformed gas supply passage 36. In this embodiment, a Doppler sensor is used as the gas flow sensor 37. The gas flow sensor 37 and the carbon monoxide sensor 40 are connected to the control unit 70. The detected information about the gas flow and the carbon monoxide concentration is inputted to the control unit 70.

The fuel reformer 30 is equipped with the blower 38 as stated above. The blower 38 introduces the oxygen-containing oxidative gas (air in this embodiment) into the reformed gas supply passage 36 to mix it with the reformed gas flowing through the passage 36, via the introducing pipe 39 connected to the reformed gas supply passage 36 downstream of the carbon monoxide sensor 40 and the gas flow sensor 37. The blower 38 is connected to the control unit 70, and driven in accordance with a drive signal from the control unit 70. Based on the information inputted from the gas flow sensor 37 and the carbon monoxide sensor 40, the control unit 70 determines an amount of the oxidative gas required to sufficiently oxidize the amount of carbon monoxide present in the reformed gas to be supplied to the CO-selective oxidation unit 34. Based on the thus-determined amount, the control unit 70 drives the blower 38. As a result, the reformed gas is mixed with an amount of oxygen required to oxidize carbon monoxide present in the reformed gas, before the gas is supplied into the CO-selective oxidation unit 34. The amount of the oxidative gas introduced is controlled on the basis of the mole ratio $[O_2]/[CO]$ of oxygen to carbon monoxide. A preferred reference mole ratio $[O_2]/[CO]$ was determined through experiments.

Based on the amount of oxygen required for theoretical occurrence of the oxidation of carbon monoxide expressed by equation (7), the value of the mole ratio $[O_2]/[CO]$ becomes 0.5. In reality, a greater amount of oxygen needs to be added (that is, the mole ratio $[O_2]/[CO]$ needs to be increased to above 0.5) in order to cause sufficient oxidation of carbon monoxide inside the carbon monoxide concentration reducing apparatus. However, an excessive amount of oxygen accelerates not only the oxidation of carbon monoxide but also the oxidation of hydrogen, although the acceleration of the oxidation of hydrogen is not desired. Moreover, if the supply of air is increased in order to increase the supply of oxygen, the partial pressure of hydrogen in the fuel gas correspondingly decreases. These problems must be minimized. Therefore, supplies of oxygen for sufficient oxidation of carbon monoxide within such a range that the problems caused by an increase in the supply of air are minimal and acceptable, were determined through experiments. In the experiments, a model gas ($H_2$ = 75%, $CO_2$ = 24.5%, CO = 0.5%) was supplied at a space velocity of $5000h^{-1}$ to a CO-selective oxidation device having substantially the same construction as that of the CO-selective oxidation unit 34 in this embodiment while the amount of oxygen introduced was varied. Results indicated that a preferable range of the value of the mole ratio $[O_2]/[CO]$ was from about 2 to about 3. In this embodiment, the value of the mole ratio of oxygen to carbon monoxide is set to 3.

The control unit 70 is formed as a logic circuit having a microcomputer as a central component. More specifically, as shown in Fig. 1, the control unit 70 includes a CPU 72 that executes predetermined operations and the like in accordance with pre-set control programs, a ROM 74 that pre-stores control programs, control data and the like that are necessary for the execution of the various operations, a RAM 76 for temporarily writing and reading various data, and an input-output port 78 for inputting detection signals from various sensors including the carbon monoxide sensor 40 and the gas flow sensor 37 and for outputting drive signals to the reforming unit 32, the CO-selective oxidation unit 34, the blower 38, the carbon monoxide sensor 40, and the like in accordance with results of operations executed by the CPU 72.

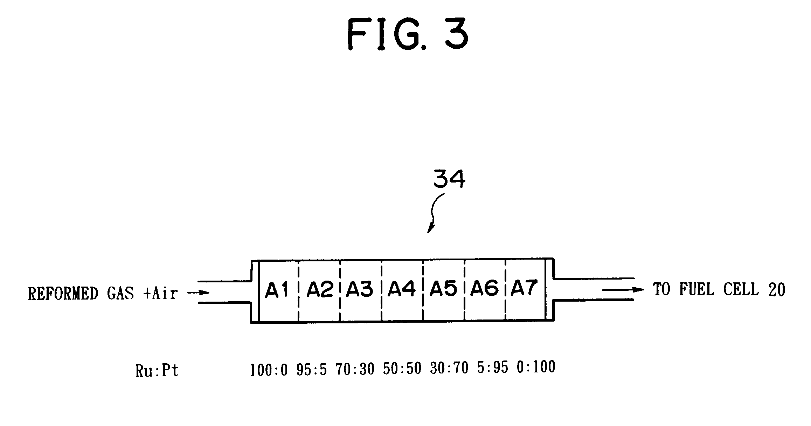

The construction of the CO-selective oxidation unit 34 will now be described. Fig. 3 is a schematic illustration of the construction of the CO-selective oxidation unit 34 incorporated in the fuel cell system 10 according to this embodiment. The interior of the CO-selective oxidation unit 34 is divided into seven regions A1-A7 that have individually different CO-selective oxidation catalysts. More specifically, the CO-selective oxidation unit 34 contains alumina pellets loaded with catalyst metals, such as platinum, ruthenium and the like, and catalyst metals formed from an alloy, such as a Pt-Ru alloy. Each of the regions A1-A7 differs from the other regions in the kind of catalyst metal supported by alumina pellets or the mixture ratio between platinum and ruthenium. If both platinum and ruthenium are present in a region, the two metals are alloyed in this embodiment whereas in an embodiment later described, the two metals are not alloyed. Regardless of whether platinum and ruthenium are alloyed, the ratio between platinum and ruthenium as catalysts in a region will hereinafter be referred to as "mixture ratio"

In the CO-selective oxidation unit 34 as shown in Fig. 1, the region A1, disposed at an upstream side where the reformed gas and air are introduced, contains alumina pellets loaded only with ruthenium. The regions A2-A6 contain alumina pellets loaded with Pt-Ru alloys, with the proportion of ruthenium in the alloy decreasing toward the downstream side, as indicated in Fig. 3. The region A7, disposed at a downstream end, contains alumina pellets loaded only with platinum. In this embodiment, the carbon monoxide concentration reducing apparatus has a plurality of regions in which the mixture ratio between platinum and ruthenium contained in the CO-selective catalysts varies. In this manner, this embodiment provides a plurality of regions that have different temperature ranges in which the carbon monoxide-selective oxidation can sufficiently progress.

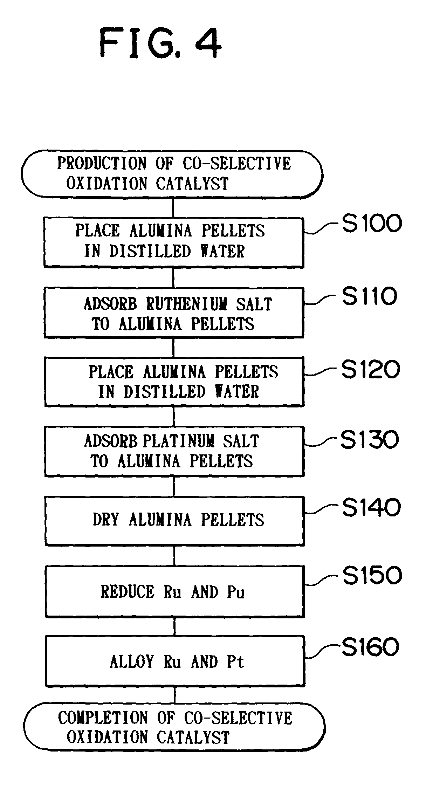

Methods of producing carbon monoxide-selective oxidation catalysts will now be described. Fig. 4 is a flowchart illustrating a method of producing a CO-selective oxidation catalyst formed from a Pt-Ru alloy. Referring to Fig. 4, porous ceramic alumina pellets of about 2-3 mm in diameter are placed in distilled water in step S100. In step S110, an aqueous solution of ruthenium chloride is gradually dripped while the water is being stirred together with the alumina pellets, so that ruthenium salt is adsorbed to the alumina pellets. Subsequently in step S120, the alumina pellets, having adsorbed ruthenium salt, are removed, and placed into distilled water. Subsequently in step S130, an aqueous solution of platinum chloride is gradually dripped while the water is being stirred, so that platinum salt is adsorbed to the alumina pellets.

In step S140, the alumina pellets, having adsorbed ruthenium salt and platinum salt, are removed, and dried by evaporating moisture therefrom. Subsequently in step S150, the alumina pellets are heated at 250-300°C in a hydrogen reducing atmosphere for about two hours, so that ruthenium and platinum on the alumina pellets are reduced and residual chloride is completely removed. In step S160, the alumina pellets are heated at 800-900°C in an inert gas flow (for example, nitrogen or argon) for about 1 hour, so that platinum and ruthenium on the alumina pellets are alloyed, thereby producing a CO-selective oxidation catalyst.

In this production method, the loading concentrations of ruthenium and platinum on alumina pellets can be set to desired concentrations by changing the ratio between the amounts of ruthenium chloride and platinum chloride in the aqueous solutions to be dripped and the amount of pellets. If the loading concentration is excessively low, the reduction in the carbon monoxide concentration may become insufficient. An excessively high loading concentration may fail to achieve a great reduction in the carbon monoxide concentration that is implied by the high loading concentration. In this embodiment, the loading concentration is from about 0.5 wt.% to about 1.0 wt.%.

Although in the above-described production method, ruthenium chloride is used to load the alumina pellets with ruthenium, it is also possible to use, instead of ruthenium chloride, one or a combination of two or more of ruthenium nitrate, ruthenium iodide, chlororuthenic acid, ammonium chlororuthenate, ruthenium hydroxide, potassium ruthenate, and the like. The salt used to load the alumina pellets with platinum may also be platinum salts other than platinum chloride.

A catalyst wherein alumina pellets are loaded with platinum and ruthenium may also be produced by any method other than the above-described method, as long as the method achieves a sufficiently high catalyst activity. For example, although in the above-described production method, ruthenium and then platinum are adsorbed to the alumina pellets, it is also possible to first adsorb platinum to alumina pellets and then adsorb ruthenium thereto. Furthermore, it is possible to simultaneously adsorb platinum and ruthenium to pellets in distilled water by simultaneously dripping thereinto a ruthenium chloride aqueous solution and a platinum chloride aqueous solution while stirring distilled water and the alumina pellets. Further, although in the above-described Pt-Ru catalyst production method, the reducing process is performed after ruthenium and platinum have been supported on the alumina pellets, the reducing process may also be performed in other manners. In a possible method, for example, a ruthenium supporting process is followed by a reducing process, and then a platinum supporting process is performed, followed by another reducing process.

Five types of Pt-Ru alloy catalysts having different platinum-ruthenium mixture ratios were actually produced by the above-described method. These catalysts correspond to the catalysts contained in the regions A2-A6 of the CO-selective oxidation unit 34 shown in Fig. 3. The mixture ratios of ruthenium to platinum were 95:5, 70:30, 50:50, 30:70, and 5:95, respectively. The mixture ratio between platinum and ruthenium in the Pt-Ru alloys was adjusted on the basis of the mole ratio between ruthenium in the ruthenium chloride aqueous solution used in step S110 in Fig. 4 and platinum in the platinum chloride aqueous solution used in step S130.

The regions A1 and A7 of the CO-selective oxidation unit 34 are filled with alumina pellets loaded only with ruthenium and alumina pellets loaded only with platinum, respectively. Such alumna pellets can be produced by a method modified from the CO-selective oxidation catalyst production method illustrated in Fig.4, that is, by omitting the step of loading the pellets with one of the two catalyst metals from the aforementioned method.

That is, a CO-selective oxidation catalyst having one of the two catalyst metals can be produced by omitting the process (steps S100, S110) of causing ruthenium salt to adsorb to alumina pellets or the process (steps S120, S130) of causing platinum salt to adsorb to alumina pellets. In this case, the alloying process in step S160 becomes unnecessary. The seven types of CO-selective oxidation catalysts produced as described above are sequentially charged into a predetermined container in the order of ruthenium or platinum concentration, so that a CO-selective oxidation unit 34 as shown in Fig. 3 is produced.

Next described will be a relationship between the proportions of platinum and ruthenium in catalysts and the temperature range in which these CO-selective oxidation catalysts become able to sufficiently reduce the carbon monoxide concentration. Ten types of CO-selective oxidation catalysts having different proportions of platinum and ruthenium were prepared, and temperature ranges allowing the catalysts to sufficiently reduce the carbon monoxide concentration in a hydrogen-rich gas were determined as described below.

First, using CO-selective oxidation catalyst production methods similar to those descried above, ten types of CO-selective oxidation catalysts having platinum-ruthenium mixture ratios (mole ratios) of 100:0, 95:5, 90:10, 85:15, 70:30, 50:50, 15:85, 10:90, 5:95 and 0:100 were produced. The catalysts were charged into separate reaction vessels having a capacity of about 10 cm$^3$. The reaction vessels were then supplied with a hydrogen-rich model gas containing carbon monoxide, and the CO concentration reducing performance of each catalyst type was determined. The composition of the model gas used was set so that it was substantially the same as the composition of the reformed gas supplied from the reforming unit 32 of the fuel cell system 10 according to this embodiment. That is, the initial composition of the model gas was: $CO = 0.5\%$, $CO_2 = 24.5\%$, and $H_2 = 75\%$. The model gas was moisturized by using water having a temperature of 60°C (corresponding to the moisturized reformed gas obtained through the reforming reaction with the value of the water-methanol ratio being 2). The moisturized model gas was further mixed with such an amount of air that the value of oxygen-carbon monoxide mole ratio became 3. The thus-obtained gas was supplied to the individual reaction vessels filled with the catalysts. The gas flow rate was set to 800 cm$^3$/min. After the aforementioned model gas was supplied to the reaction vessels, the CO concentration in the gas discharged from an outlet of each reaction vessel was measured by gas chromatography. The CO concentrations in the gas discharged from each reaction vessel while the temperature of the vessel was maintained at various temperatures were measured. On the basis of the measured CO concentrations with regard to each catalyst, a temperature range that enabled the catalyst to sufficiently reduce the CO concentration was determined.

In polymer electrolyte fuel cells similar to or substantially the same as the fuel cell 20 of the fuel cell system 10 according to the embodiment, the allowable carbon monoxide concentration in the fuel gas supplied thereto is about 1 ppm as mentioned above. The temperature range enabling the catalyst to sufficiently reduce the CO concentration was defined as a temperature range where the carbon monoxide concentration in the gas discharged from a reaction vessel was at most 1 ppm. The thus-defined temperature range was determined for each catalyst type. Results are shown in TABLE 1 below.

TABLE 1

| Pt:Ru ratio (mole ratio) | Temperature (°C) at which CO concentration became 1 ppm or less |
|---|---|
| 100:0 | 70-80 |
| 95:5 | 80-90 |
| 90:10 | 90-100 |
| 85:15 | 100-130 |
| 70:30 | 110-140 |
| 50:50 | 120-140 |
| 15:85 | 120-150 |
| 10:90 | 130-150 |
| 5:95 | 140-160 |
| 0:100 | 160-180 |

As shown in TABLE 1, the temperature range in which the catalyst was able to reduce the CO concentration to 1 ppm or less was lowest in the case of the Pt catalyst (Pt:Ru = 100:0), that is, 70-80°C. The Ru catalyst (Pt:Ru = 0:100) had the highest temperature range of 160-180°C. The temperature ranges of the Pt-Ru alloy catalysts varied between the temperature range of the Pt catalyst and the temperature range of the Ru catalyst, corresponding to the Pt-Ru mixture ratios (alloy ratios). More specifically, the temperature range became higher as the Pt proportion decreased, that is, as the Ru proportion increased. The results indicate that a CO-selective oxidation catalyst whose activity becomes sufficiently high to achieve a required reduction in the CO concentration at a desired temperature within the range of 70-180°C can be obtained by selecting a suitable Pt-Ru alloy ratio or using the Pt catalyst or the Ru catalyst.

Using a combination of catalysts having different ruthenium-platinum ratios, the CO-selective oxidation unit 34 in this embodiment has a construction in which an upstream region and a downstream region have different temperature ranges for a sufficient reduction in the CO concentration. Since the reforming unit 32 for producing the reformed gas is operated in a temperature range of from about 200-300°C, the temperature of the reformed gas supplied to the CO-selective oxidation unit 34 typically becomes about 180°C, as mentioned above. The region A1 disposed at the upstream side, where the reformed gas is introduced into the CO-selective oxidation unit 34, contains a ruthenium catalyst whose temperature range for a sufficient CO concentration reduction is 160-180°C. Therefore, supplied with the reformed gas of a temperature of about 180°C from the reforming unit 32, the region A1 of the CO-selective oxidation unit 34 gains a sufficiently high catalyst activity and promptly starts the CO-selective oxidation.

The CO-selective oxidation expressed by equation (7) is an exothermic reaction, so that cooling is required. The CO-selective oxidation unit 34 is equipped with a cooling device (not shown) for active cooling, whereby a desirable range of the internal temperature is maintained. As an example of the cooling method, water or methanol may be utilized. In this embodiment, methanol and water from the methanol tank 12 and the water tank 14 are circulated around an outer peripheral portion of the CO-selective oxidation unit 34 for the purpose of heat exchange before being supplied to the reforming unit 32. In this manner, the CO-selective oxidation unit 34 can be actively cooled. Methanol and water are then vaporized by the vaporizer before being supplied to the reforming unit 32 as mentioned above. Since the heat exchange with the CO-selective oxidation unit 34 warms methanol and water, the energy required by the vaporizer can be reduced. Furthermore, due to the active cooling of the CO-selective oxidation unit 34 using methanol and water, it is possible to reduce the temperature of the reformed gas passing through the CO-selective oxidation unit 34 despite the exothermic reactions occurring in the CO-selective oxidation unit 34. A temperature sensor 35 connected to the control unit 70 is disposed in the CO-selective oxidation unit 34. Using the temperature sensor 35, the control unit 70 detects the internal temperature of the CO-selective oxidation unit 34. Based on the detection result provided by the temperature sensor 35, the flows of methanol and water circulating in the outer peripheral portion of the CO-selective oxidation unit 34 can be controlled so as to maintain a desired range of the internal temperature of the CO-selective oxidation unit 34.

In the CO-selective oxidation unit 34 of this embodiment, the flows of methanol and water circulating in the outer peripheral portion of the CO-selective oxidation unit 34 are controlled on the basis of the temperature of the region A7 detected by the temperature sensor 35 so that the temperature of the fuel gas discharged from the CO-selective oxidation unit 34 becomes about 70°C. In this embodiment, the fuel cell 20, supplied with the fuel gas from the CO-selective oxidation unit 34, is operated at about 70°C. Therefore, by setting the temperature of the fuel gas discharged by the CO-selective oxidation unit 34 to about 70°C, the fuel gas can be immediately introduced into the fuel cell 20 without a need for further temperature adjustment. In the CO-selective oxidation unit 34 of this embodiment, the downstream-side region A7 contains a Pt catalyst whose active temperature range for facilitating the CO-selective oxidation is 70-80°C as shown in TABLE 1, and the internal temperature is adjusted through the cooling using methanol and water so that the temperature of the region A7 located near the outlet of the fuel gas becomes 70-80°C. The "active temperature range" means a temperature range in which the catalyst activity becomes sufficiently high. Therefore, the embodiment is able to supply the fuel cell 20 with the fuel gas whose temperature has been reduced to a desirable temperature while also securing sufficiently high catalyst activity for facilitating the CO-selective oxidation even in the downstream-side regions of the CO-selective oxidation unit 34, so that the CO concentration can be sufficiently reduced. The cooling method employed by the cooling device provided for the CO-selective oxidation unit 34 is not limited to the aforementioned method using water and methanol, but may also be other methods, for example, an air cooling method, a fluid cooling method, or the like.

The regions between the region A1 and the region A7 in the CO-selective oxidation unit 34 (i.e., regions A2-A6) contain Pt-Ru alloy catalysts having different Pt-Ru ratios. The regions are arranged in such a manner that the proportion of ruthenium increases toward the upstream end and the proportion of platinum increases toward the downstream end. In Pt-Ru alloy catalysts, the temperature range in which the catalyst activity for facilitating the CO-selective oxidation becomes sufficiently high varies within the range of 70-180°C, as mentioned above as shown in TABLE 1. That is, the temperature range becomes higher with increases in the ruthenium proportion, and becomes lower with increases in the platinum proportion. The CO-selective oxidation unit 34 of this embodiment is cooled by the cooling device in such a manner that the temperature of the reformed gas introduced at the upstream side is kept at about 180°C and the temperature of the fuel gas discharged at the down stream side becomes about 70-80°C. Thus, the interior of the CO-selective oxidation unit 34 obtains a temperature gradient of from about 180°C to 70°C from the upstream side to the downstream side. Therefore, the CO-selective oxidation catalysts disposed in the CO-selective oxidation unit 34 can always maintain sufficiently high activity for facilitating the CO-selective oxidation.

By adjusting the platinum-ruthenium mixture ratio in the Pt-Ru alloy catalyst in the CO-selective oxidation unit 34 of this embodiment, the temperature range for catalytic facilitation of the CO-selective oxidation can be set to any temperature range within a wide range of from about 80°C to about 160°C, corresponding to Pt:Ru ratios of from about 95:5 to about 5:95. In Pt-Ru alloy catalysts, the temperature range in which the catalyst activity for facilitating the CO-selective oxidation becomes sufficiently high can be set to a desired temperature range by adjusting the platinum-ruthenium mixture ratio. Furthermore, by using a combination of Pt-Ru alloy catalysts having different platinum-ruthenium mixture ratios, it is possible to form a CO-selective oxidation unit that has a widened temperature range for sufficiently high catalyst activity for facilitating the CO-selective oxidation. Further, if a Pt catalyst and a Ru catalyst are used in addition to Pt-Ru alloy catalysts, the catalyst activity for sufficiently facilitating the CO-selective oxidation can be achieved over a wide temperature range of about 70-200°C.

In the CO-selective oxidation unit 34 of this embodiment, the Ru catalyst and the Pt catalyst are disposed in the upstream side and the downstream side, respectively, and the Pt-Ru alloy catalysts are disposed therebetween, with the ruthenium proportion increasing towards the upstream side. The reformed gas produced by the reforming unit 32 is directly introduced into the CO-selective oxidation unit 34, and the temperature of regions at the downstream side, where the fuel gas is let out of the unit 34, is controlled in correspondence to the operating temperature of the fuel cell 20, so that the temperature gradient of about 180-70°C from the upstream side to the downstream side is formed. Since the CO-selective oxidation unit 34 has the aforementioned arrangement of CO-selective oxidation catalysts, the entire CO-selective oxidation unit 34 can achieve sufficiently high catalyst activity for facilitating the CO-selective oxidation. Furthermore, since the CO-selective oxidation catalysts are arranged in the CO-selective oxidation unit 34 in accordance with the temperature of the reformed gas supplied from the reforming unit 32 and the operating temperature of the fuel cell 20, the arrangement eliminates the need for provision of a gas temperature adjusting device in the reformed gas supply passage extending from the reforming unit 32 to the CO-selective oxidation unit 34, or in the fuel gas supply passage extending from the CO-selective oxidation unit 34 to the fuel cell 20, thereby allowing simplification of the entire construction of the fuel cell system 10. Even if the total magnitude of loads connected to the fuel cell 20 is changed so that the amount of CO-selective oxidation occuring in the CO-selective oxidation unit 34, that is, the amount of heat produced in the CO-selective oxidation unit 34, changes, the aforementioned temperature gradient can be formed in the CO-selective oxidation unit 34 by controlling the cooling device so that the temperature of the region A7 located near the outlet of the fuel gas becomes about 70-80°C. Therefore, even in such a situation, the sufficiently high activity for facilitating the CO-selective oxidation can be reliably achieved in the entire CO-selective oxidation unit 34.

Furthermore, the proportion of the Ru catalyst is increased at the upstream side, where the temperature is relatively high, and the proportion of the Pt catalyst is increased at the downstream side, where the temperature is relatively low, so that the CO-selective oxidation unit 34 can curb generation of carbon monoxide through the reverse progress of the reaction expressed by equation (5), and can therefore curb or prevent an increase in the CO concentration in the fuel gas. The possible increase in the CO concentration will be described further in detail. The aforementioned CO-selective oxidation catalysts have activity for facilitating not only the CO-selective oxidation expressed by equation (7), but also the reaction expressed by equation (5) (hereinafter, referred to as the "shift reaction") and the reverse reaction implied by equation (5) (hereinafter, referred to as the "reverse shift reaction"). The reverse shift reaction produces carbon monoxide. The reverse shift reaction, that is, the reaction that occurs in a direction opposite to the direction of the reaction expressed by equation (5), is expressed by equation (8). The shift reaction expressed by equation (5) is an exothermic reaction, and the reverse shift reaction expressed by equation (8) is an endothermic reaction.

$$H_2 CO_2 \rightarrow H_2O \ CO \tag{8}$$

The reactions expressed by equations (5) and (8) are reversible, If the concentration of a reactant or product substance or the ambient temperature changes, one of the reactions (5) and (8) becomes more active. For example, if a Pt catalyst is at a temperature of 100-160°C, the Pt catalyst accelerates the reverse shift reaction (8), that is, an endothermic reaction, so that carbon monoxide is produced. In the CO-selective oxidation unit 34 of this embodiment, temperature control is performed so that the temperature of the downstream-side regions, where the Pt catalyst proportion is relatively high, becomes relatively low and, in particular, the temperature of the region adjacent to the outlet becomes about 70-80°C. Therefore, the thus-controlled low temperature at the downstream side eliminates the danger of an insufficient reduction in the CO concentration caused by the reverse shift reaction.

In the upstream-side regions of the CO-selective oxidation unit 34, the catalyst temperature is relatively high so that the reverse shift reaction is more likely to occur. The Ru catalyst, whose proportion is relatively high in the upstream-side regions, has activity for facilitating not only the aforementioned reactions but also a carbon monoxide-methanating reaction expressed by equation (9). Therefore, if carbon monoxide is undesirably produced through the reverse shift reaction at the upstream side of the CO-selective oxidation unit 34, where the catalyst temperature is relatively high, the amount of carbon monoxide thus produced can be consumed by the carbon monoxide-methanating reaction (9) below, thereby preventing an increase in the CO concentration in the fuel gas.

$$CO + 3H_2 \rightarrow CH_4 + H_2O \tag{9}$$

Although in the foregoing embodiment, the interior of the CO-selective oxidation unit 34 is divided into seven regions that contain catalysts having different platinum and ruthenium proportions, the interior of the CO-selective oxidation unit 34 may also be divided into a different number of regions. It is not necessary to divide the interior of the CO-selective oxidation unit 34 into equal sizes. That is, in accordance with the temperature distribution in the CO-selective oxidation unit 34, the regions may vary in size and, furthermore, the proportions of platinum and ruthenium in the catalysts contained in the regions may be suitably adjusted. If CO-selective oxidation catalysts having different platinum-ruthenium mixture ratios that have been suitably selected are arranged in the divided regions of the CO-selective oxidation unit in accordance with the temperature distribution in the unit, the sufficiently high catalyst activity for facilitating the CO-selective oxidation can reliably achieved in the entire CO-selective oxidation unit.

Although the first embodiment employs catalysts in which platinum and ruthenium are alloyed, it is also possible to obtain a non-alloyed Pt-Ru catalyst having activity for sufficiently facilitating the CO-selective oxidation within a desired temperature range by adjusting the mixture ratio between platinum and ruthenium. If ruthenium and platinum are not alloyed but mixed in a catalyst, it becomes possible to increase the amount of gas that can be subjected to unit volume of the catalyst for reducing the CO concentration. A second embodiment of the invention in which a CO-selective oxidation unit employs non-alloyed Pt-Ru catalysts will be described below.

The catalyst performance of a Pt-Ru alloy catalyst and a non-alloyed Pt-Ru catalyst will first be described. Normally, in a catalyst having a plurality of catalyst metals, the alloying of catalyst metals results in reduced distances between the catalyst metals (elements) and therefore an increased activity for facilitating predetermined reactions, thereby improving the catalyst performance. However, the alloying increases the size of catalyst metal particles supported on a base so that the total surface area of the catalyst decreases. The total surface area of the catalyst affects the amount of gas that can be processed per unit volume of the catalyst (that is, the amount of reformed gas that allows a sufficient CO concentration reduction). Therefore, the alloying of catalyst metals is considered to reduce the amount of gas that can be processed per unit volume of the catalyst.

The effect of the alloying of catalyst metals on the amount of gas that can be processed per unit volume of the catalyst was studied as described below. Two types of catalysts having a platinum-ruthenium mole ratio of 50:50 were produced, by performing the alloying process for one of the catalysts and omitting the alloying process for the other catalyst. The Pt-Ru alloy catalyst was produced by a method as described in conjunction with the first embodiment, that is, a production method as illustrated in Fig. 4. The non-alloyed Pt-Ru catalyst was produced by a method in which the alloying process (step S160) shown in Fig. 4 was omitted.

The Pt-Ru alloy catalyst and the non-alloyed Pt-Ru catalyst produced as described above were charged into separate reaction vessels having a capacity of about 10 cm$^3$. The reaction vessels were then supplied with a hydrogen-rich model gas containing carbon monoxide, and the CO concentration reducing performance of each catalyst was determined. The composition of the model gas used was set as described in conjunction with the first embodiment. That is, the initial composition of the model gas was: CO= 0.5%, CO$_2$= 24.5%, and H$_2$= 75%. The model gas was moisturized by using water having a temperature of 60°C. The moisturized model gas was further mixed with such an amount of air that the value of the oxygen-carbon monoxide mole ratio became 3. The thus-obtained gas was supplied to the individual reaction vessels filled with the catalysts. The temperature of the reaction vessels was maintained at 130°C. After the aforementioned model gas was supplied to the reaction vessels, the CO concentration in the gas discharged from an outlet of each reaction vessel was measured by gas chromatography. By varying the flow of gas supplied to each reaction vessel, a maximum space velocity SV (the flow of gas processed per unit volume of the catalyst) where the CO concentration in the gas discharged from the reaction vessel was 1 ppm or less was determined. The results are shown in TABLE 2.

TABLE 2

|  | Maximum space velocity SV(h$^{-1}$) where CO concentration became 1 ppm or less |
| --- | --- |
| Non-alloyed catalyst | 40,000 |
| Alloyed catalyst | 20,000 |

As shown in TABLE 2, the non-alloyed Pt-Ru catalyst demonstrated a much greater maximum space velocity where the CO concentration in the discharged gas became 1 ppm or less, than the alloyed catalyst. In the non-alloyed Pt-Ru catalyst, the size of catalyst metal particles supported on alumina pellets was 0.5-2 nm. The catalyst metal particle size can be adjusted on the basis of, for example, the reducing temperature set in the process of reducing ruthenium and platinum (corresponding to step S150 in Fig. 4), and the like. A non-alloyed Pt-Ru catalyst produced under the aforementioned conditions according to the second embodiment had a catalyst metal particle size within the aforementioned range. The Pt-Ru alloy catalyst produced by subjecting the non-alloyed Pt-Ru catalyst to a known alloying process under the aforementioned conditions had a catalyst metal particle size of 1-20 nm. The results indicate that if the alloying process increases the catalyst metal particle size and therefore reduces the total catalyst metal surface area, the amount of gas that can be processed per unit volume of the catalyst decreases.

Non-alloyed catalysts having different platinum-ruthenium mixture ratios can be produced by the above-described method. If the non-alloyed catalysts are sequentially charged into a container, a CO-selective oxidation unit substantially the same as the CO-selective oxidation unit 34 in the first embodiment can be produced. By arranging the non-alloyed catalysts in such a manner that the ruthenium proportion (mixture ratio) increases toward the upstream side as in the first embodiment, it is also possible to produce a CO-selective oxidation unit wherein the temperature range for sufficiently facilitating the CO-selective oxidation becomes higher with progress toward the upstream side. For example, if a ruthenium catalyst and a platinum catalyst are disposed near the inlet of the reformed gas and the outlet of the fuel gas, respectively, and non-alloyed Pt-Ru catalysts are arranged in such a manner that the ruthenium proportion increases toward the upstream side (ruthenium catalyst side), a sufficient progress of the CO-selective oxidation can be achieved throughout the flow passage of the reformed gas in the CO-selective oxidation unit where the temperature is controlled so as to gradually decrease from about 180°C to about 70°C in the direction of the gas flow.

In the CO-selective oxidation unit produced according to the second embodiment, platinum and ruthenium in catalysts are not alloyed, and the catalyst metal particle size supported on a base is as small as about 0.5-2 nm, so that the total catalyst surface area is increased. Therefore, the space velocity SV can be further increased. Due to an increased space velocity SV, the amount of the reformed gas that can be processed per unit volume of the catalysts is increased, so that the entire CO-selective oxidation unit can be reduced in size.

The production method for a non-alloyed Pt-Ru catalyst is not limited to the above-described method. Any other method may also be employed that achieves a sufficiently small particle size of platinum and ruthenium, that is, catalyst metals (for example, a particle size within the range of about 0.5-2 nm). According to the second embodiment, the alloying process including a high-temperature heating step is omitted, so that small catalyst metal particles can be maintained. Due to the thus-increased total catalyst surface area, the second embodiment achieves various advantages.

Although in the second embodiment, alumina pellets are loaded with ruthenium prior to platinum in production of a non-alloy catalyst, it is also possible to load alumina pellets with platinum prior to ruthenium or simultaneously load alumina pellets with aluminum and ruthenium. In either case, a sufficiently small catalyst metal particle size is achieved, so that the amount of the reformed gas that can be processed per unit volume of the catalyst can be advantageously increased. However, the property of a non-alloyed Pt-Ru catalyst varies depending on the sequence of loading a base with platinum and ruthenium, even if the final mixture ratio between platinum and ruthenium supported on the base remains unchanged. More specifically, even if the proportions of platinum and ruthenium remain unchanged, the property of one of the two catalyst metals that is second supported on a base is more strongly reflected in the property of a resultant non-alloyed catalyst than the property of the catalyst metal supported earlier thereon. This feature is incorporated in a third embodiment of the invention described below.

The performance of a non-alloy Pt-Ru catalyst produced by first loading a base with platinum and the performance of a non-alloyed Pt-Ru catalyst produced by first loading a base with ruthenium were compared as described below. Non-alloyed catalysts in which ruthenium was first supported were produced by a method substantially the same as the non-alloyed Pt-Ru catalyst production method described in conjunction with the second embodiment, that is, by a method substantially the same as the CO-selective oxidation catalyst production method illustrated in Fig. 4, except that the alloying process of step S160 was omitted. Non-alloyed catalysts in which platinum was first supported were produced by a method substantially the same as the production method for the non-alloyed catalysts in which ruthenium was first supported, except that the ruthenium salt adsorbing process of step S110 and the platinum salt adsorbing process of step S130 were interchanged.

For each of various platinum-ruthenium mixture ratios, a non-alloy Pt-Ru catalyst in which ruthenium was first supported (hereinafter, referred to as "ruthenium-first catalyst") and a non-alloy Pt-Ru catalyst in which platinum was first supported (hereinafter, referred to as "platinum -first catalyst") were produced. More specifically, for each of the platinum-to-ruthenium mixture ratios of 90:10, 50:50, 15:85, a ruthenium-first catalyst and a platinum-first catalyst were produced. The performance of the ruthenium-first and platinum-first catalysts were compared as follows. The thus-produced catalysts were separately charged into reaction vessels having a capacity of about 10 cm³. The reaction vessels were supplied with a hydrogen-rich model gas containing carbon monoxide to determine the performance of each catalyst in reducing the CO concentration. The initial composition of the model gas used was: $CO = 0.5\%$, $CO_2 = 24.5\%$, and $H_2 = 75\%$. As in the first embodiment, the model gas was moisturized by using water of 60°C. The moisturized model gas was further mixed with such an amount of air that the value of oxygen-carbon monoxide mole ratio became 3. The thus-obtained gas was supplied to the individual reaction vessels filled with the catalysts. The gas flow rate was set to 800 cm$^3$/min. After the aforementioned model gas was supplied to the reaction vessels, the CO concentration in the gas discharged from an outlet of each reaction vessel was measured by gas chromatography. The CO concentrations in the gas discharged from each reaction vessel while the temperature of the vessel was maintained at various temperatures were measured. On the basis of the measured CO concentrations with regard to each catalyst, a temperature range that enabled the catalyst to sufficiently reduce the CO concentration was determined.

That is, with regard to each catalyst, a temperature range where the carbon monoxide concentration in the gas discharged from the reaction vessel became 1 ppm or less was determined. Results are shown in TABLE 3.

TABLE 3

| Pt:Ru ratio | Supporting sequence (catalyst metal first supported) | Temperature range (°C) where CO concentration became 1 ppm or less |
|---|---|---|
| 90:10 | Pt | 100-110 |
| 90:10 | Ru | 80-90 |
| 50:50 | Pt | 130-150 |
| 50:50 | Ru | 100-120 |
| 15:85 | Pt | 140-160 |
| 15:85 | Ru | 110-130 |

As shown in TABLE 3, the temperature range that enabled a reduction of the CO concentration to 1 ppm or less became higher as the ruthenium proportion increased. If the platinum-ruthenium mixture ratio remained unchanged, the platinum-first catalyst exhibited a higher temperature range for a CO concentration reduction to 1 ppm or less than the ruthenium-first catalyst. Normally, ruthenium has a high performance in reducing the CO concentration at relatively high temperatures, whereas platinum has a high performance in reducing the CO concentration at relatively low temperatures. Therefore, the results shown in TABLE 3 indicate that if ruthenium and platinum are supported on a base separately in time to produce a CO-selective oxidation catalyst, the property of the catalyst metal second supported is more strongly reflected in the property of the resultant CO-selective oxidation catalyst.

The temperature range for sufficiently facilitating the CO-selective oxidation varies depending on the sequence of supporting ruthenium and platinum on a base, as described above. Therefore, the amounts of platinum and ruthenium required to produce a CO-selective oxidation unit (or catalyst) having a given performance varies depending on the sequence of supporting the two catalyst metals on a base. For example, in the production of a CO-selective oxidation unit as in the first and second embodiments, that is, in the production of a CO-selective oxidation unit in which catalysts having different ruthenium-platinum mixture ratios are arranged in such a manner that the ruthenium-platinum mixture ratio varies from the upstream side to the downstream side, more specifically, in such a manner that the temperature range for sufficiently increasing the CO-selective oxidation catalyst activity becomes lower from the upstream side to the downstream side, the amount of each of platinum and ruthenium required varies between the case where Pt-first catalysts are used and the case where the Ru-first catalysts are used. This will be described below.

TABLE 4 shows the ratios between the amounts of platinum and the amounts of ruthenium required to form regions A1-A7 of a CO-selective oxidation unit that is similar to the CO-selective oxidation unit 34 in the first embodiment shown in Fig. 3, but that incorporates non-alloyed Pt-Ru catalysts, in the case where ruthenium-first catalysts are used and in the case where platinum-first catalysts are used.

TABLE 4

|  | A1 | A2 | A3 | A4 | A5 | A6 | A7 |
|---|---|---|---|---|---|---|---|
| Ru:Pt (in Ru-first) | 100:0 | 95:5 | 85:15 | 70:30 | 50:50 | 30:70 | 0:100 |
| Ru:Pt (in Pt-first) | 100:0 | 95:5 | 70:30 | 50:50 | 30:70 | 5:95 | 0:100 |

As in the first embodiment, a Ru-catalyst is disposed in the region A1 located near the inlet through which the reformed gas is introduced, and a Pt-catalyst is disposed in the region A7 located near the outlet through which the fuel gas is discharged. Five non-alloy Pt-Ru catalysts are disposed between the regions 1 and 7 in such a manner that the ruthenium proportion decreases stepwise from the upstream side to the downstream side corresponding to a operating temperature gradient of the CO-selective oxidation unit where the operating temperature gradually decreases from the upstream side to the downstream side. If the ruthenium-platinum ratio in a ruthenium-first catalyst and the ruthenium-platinum ratio in a platinum-first catalyst for each of the regions A2-S6 are determined corresponding to a predetermined operating temperature for the region, the Ru-first catalyst needs a greater ruthenium proportion than the Pt-first catalyst in a given region, as shown in TABLE 4.

Therefore, in the production of a CO-selective oxidation unit similar to the CO-selective oxidation unit 34 in the first embodiment by using non-alloyed Pt-Ru catalysts, it is possible to adjust the ratio between the amounts of platinum and ruthenium required, that is, to select one of the two catalyst metals for more generous use, by determining which one of the catalyst metals will be first supported on a base. If ruthenium is first supported on a base, the amount of platinum used as a catalyst metal in a CO-selective oxidation unit is reduced. Since platinum is relatively expensive, employment of ruthenium-first catalysts can reduce the production cost of a CO-selective oxidation unit.

Although in the foregoing embodiments, alumina pellets are loaded with platinum and ruthenium, that is, catalyst metals, it is also possible to employ other constructions. For example, a metal honeycomb may also be used as a base, wherein the surface of the metal honeycomb is coated with alumina, and then loaded with the catalyst metals. With this catalyst construction, it is also possible to form a CO-selective oxidation unit including a plurality of regions having different temperature ranges for enabling sufficient facilitation of the CO-selective oxidation. In particular, if the alloying of alumina and ruthenium is omitted to achieve a small catalyst metal particle size, or if the sequence of supporting platinum and ruthenium on a base, such as a metal honeycomb, is suitably selected in production of a non-alloyed Pt-Ru catalyst, substantially the same advantages as described above can also be achieved.

The foregoing embodiments use platinum and ruthenium as a first catalyst metal and a second catalyst metal to form a CO-selective oxidation catalyst, wherein the temperature range for sufficiently facilitating the CO-selective oxidation is adjusted on the basis of the mixture ratio between the first and second catalyst metals. The aforementioned "first catalyst metal" and "second catalyst metal" do not indicate a sequence in time. However, according to the invention, the carbon monoxide-selective catalyst may also contain one or more other components including one or more catalyst metals, in addition to the first and second catalyst metals, if the property that the temperature range for sufficiently facilitating the CO-selective oxidation can be varied on the basis of the mixture ratio between the first and second catalyst metals is maintained.

The activity of a carbon monoxide-selective oxidation catalyst is increased, and the temperature range in which the catalyst activity for facilitating a carbon monoxide-selective oxidation becomes sufficiently high is expanded. A CO-selective oxidation unit(34) contains carbon monoxide-selective oxidation catalysts having catalyst metals including platinum and ruthenium. The interior of the unit(34) is divided into a plurality of regions(A1, A2, A3, A4, A5, A6, A7). An upstream-end region(A1) has only ruthenium as a catalyst metal. A downstream-end region(A7) has only platinum as a catalyst metal. In intermediate regions(A2, A3, A4, A5, A6) between these regions, platinum and ruthenium as catalyst metals are present in mixed states. The ruthenium proportion becomes higher toward the upstream-end region(A1). Therefore, the temperature range in which the activity for facilitating the CO-selective oxidation becomes sufficiently high also becomes higher toward the upstream-end region(A1) in the CO-selective oxidation unit(34).

While the present invention has been described with reference to what are presently considered to be preferred embodiments thereof, it is to be understood that the invention is not limited to the disclosed embodiments or constructions.

## Claims

1. A carbon monoxide concentration reducing apparatus (34) that receives a hydrogen-rich gas containing carbon monoxide, reduces a carbon monoxide concentration by a selective oxidation in which carbon monoxide is selectively oxidized, and discharges a hydrogen-rich gas in which the carbon monoxide concentration has been reduced, characterized by comprising:

   a carbon monoxide-selective oxidation catalyst that facilitates the selective oxidation of carbon monoxide in a hydrogen-rich gas, the carbon monoxide-selective oxidation catalyst including a first catalyst metal having a first active temperature range and a second catalyst metal having a second active temperature range different from the first active temperature range, the carbon monoxide-selective oxidation catalyst having an active temperature range that is intermediate relative to the first active temperature range of the first catalyst metal and the second active temperature range of the second catalyst metal that are exhibited individually by the first catalyst metal and the second catalyst metal, respectively,
   wherein a mixture ratio between the first catalyst metal and the second catalyst metal is set on the basis of a pre-set temperature of the carbon monoxide-selective oxidation catalyst.

2. A carbon monoxide concentration reducing apparatus (34) according to claim 1, wherein the first catalyst metal is platinum, and the second catalyst metal is ruthenium.

3. A carbon monoxide concentration reducing apparatus (34) according to claim 1 or 2, wherein the carbon monoxide-selective oxidation catalyst is a non-alloyed catalyst.

4. A carbon monoxide concentration reducing apparatus (34) according to any one of claims 1 through 3, wherein the first catalyst metal and the second catalyst metal have a particle size within a range of 0.5 nm to 2 nm.

5. A carbon monoxide concentration reducing apparatus (34) according to claim 1,
wherein a mixture ratio between the first catalyst metal and the second catalyst metal varies between an upstream-side region (A1) where the hydrogen-rich gas is received and a downstream-side region (A7) where the hydrogen-rich gas is discharged, and
wherein the active temperature range of the carbon monoxide-selective oxidation catalyst is higher in the upstream-side region (A1) than in the downstream-side region (A7).

6. A carbon monoxide concentration reducing apparatus (34) according to claim 5, wherein the mixture ratio of the second catalyst metal to the first catalyst metal is higher at the upstream-side region (A1) than at the downstream-side region (A7).

7. A carbon monoxide concentration reducing apparatus (34) according to claim 6, wherein the first catalyst metal is platinum, and the second catalyst metal is ruthenium.

8. A carbon monoxide-selective oxidation catalyst that selectively facilitates a carbon monoxide-selective oxidation in which carbon monoxide is selectively oxidized, in a hydrogen-rich gas containing carbon monoxide, by using an oxidative gas containing oxygen, characterized by comprising:

at least one catalyst metal supported on a predetermined base, the at least one catalyst metal including platinum and ruthenium,
wherein the at least one catalyst metal has a particle size within a range of from 0.5 nm to 2nm.

9. A carbon monoxide concentration reducing method for reducing a carbon monoxide concentration in a hydrogen-rich gas by a selective oxidation in which carbon monoxide is selectively oxidized, characterized by comprising the steps of:

supplying a hydrogen-rich gas containing carbon monoxide and an oxidative gas containing oxygen to a carbon monoxide concentration reducing portion (34) that conducts the selective oxidation;
forming in the carbon monoxide concentration reducing portion (34) a carbon monoxide-selective oxidation catalyst including a mixed region (A1, A2, A3, A4, A5, A6, A7) in which a first catalyst metal and a second catalyst metal are present in a mixed state; and
determining a mixture ratio between the first catalyst metal and the second catalyst metal on the basis of an operating temperature of the carbon monoxide concentration reducing portion (34),
wherein an active temperature range in the mixed region (A1, A2, A3, A4, A5, A6, A7) in which the first catalyst metal and the second catalyst metal are present in the mixed state is intermediate relative to a first active temperature range of the first catalyst metal and a second active temperature range of the second catalyst metal that are exhibited individually by the first catalyst metal and the second catalyst metal, respectively, and the active temperature range in the mixed region corresponds to the mixture ratio between the first catalyst metal and the second catalyst metal.

10. A carbon monoxide concentration reducing method according to claim 9, wherein the mixture ratio between the first catalyst metal and the second catalyst metal in the mixed region (A1, A2, A3, A4, A5, A6, A7) varies between an upstream side (A1) where the hydrogen-rich gas is supplied and a downstream side (A7) where the hydrogen-rich gas is discharged, and
wherein an active temperature range of the carbon monoxide-selective oxidation catalyst is higher at the upstream side (A1) than at the downstream side (A7).

11. A carbon monoxide concentration reducing method according to claim 10, wherein the mixture ratio of the second catalyst metal to the first catalyst metal is higher at the upstream side (A1) than at the downstream side (A7).

**12.** A carbon monoxide concentration reducing method for reducing a carbon monoxide concentration in a hydrogen-rich gas by a selective oxidation in which carbon monoxide is selectively oxidized, characterized by comprising the steps of:

supplying a hydrogen-rich gas containing carbon monoxide and an oxidative gas containing oxygen to a carbon monoxide concentration reducing portion (34) that conducts the selective oxidation;
estimating a desirable temperature distribution in the carbon monoxide concentration reducing portion (34) on the basis of at least one of a temperature of the hydrogen-rich gas supplied, an amount of heat produced by the selective oxidation under steady state conditions, and an operating temperature of an apparatus (20) to which the hydrogen-rich gas discharged from the carbon monoxide concentration reducing portion is supplied;
dividing the carbon monoxide concentration reducing portion (34) into a plurality of regions (A1, A2, A3, A4, A5, A6, A7) on the basis of the estimated desirable temperature distribution; and
determining a mixture ratio between a first catalyst metal and a second catalyst metal in each of the plurality of regions (A1, A2, A3, A4, A5, A6, A7)on the basis of the estimated desirable temperature distribution,
wherein an active temperature range in each of the plurality of regions (A1, A2, A3, A4, A5, A6, A7) varies from one region to another, and is intermediate relative to a first active temperature range of the first catalyst metal and a second active temperature range of the second catalyst metal that are exhibited individually by the first catalyst metal and the second catalyst metal, and the active temperature in each of the plurality of regions corresponds to the mixture ratio in the region.

**13.** A carbon monoxide concentration reducing method according to any one of claims 9 through 12, wherein the first catalyst metal is platinum, and the second catalyst metal is ruthenium.

**14.** A method for producing a carbon monoxide-selective oxidation catalyst that facilitates a selective oxidation in which carbon monoxide in a hydrogen-rich gas is selectively oxidized, characterized by comprising the steps of:

determining a mixture ratio between a first catalyst metal and a second catalyst metal that have different active temperature ranges, respectively; and
loading a base with the first catalyst metal and the second catalyst metal on the basis of the mixture ratio,
wherein an active temperature range of the carbon monoxide-selective oxidation catalyst is intermediate relative to the active temperature range of the first catalyst metal and the active temperature range of the second catalyst metal that are exhibited individually by the first catalyst metal and the second catalyst metal, respectively.

**15.** A method for producing a carbon monoxide-selective oxidation catalyst according to claim 14, wherein the first catalyst metal is platinum, and the second catalyst metal is ruthenium.

# FIG. 1

REFORMING UNIT — 32

CO-SELECTIVE OXIDATION UNIT — 34

FUEL CELL — 20

INPUT/OUTPUT PORT — 70

CPU — 72
ROM — 74
RAM — 75

— 78

30 · 10 · 37 · 40 · 36 · 39 · 38 · 35 · 18 · 17 · 12 · 14

EP 0 955 351 A1

# FIG. 2

25  23  21  22  24  28

25P

24P

# FIG. 3

REFORMED GAS +Air → | A1 | A2 | A3 | A4 | A5 | A6 | A7 | → TO FUEL CELL 20

34

Ru:Pt     100:0   95:5   70:30   50:50   30:70   5:95   0:100

# FIG. 4

```
┌─────────────────────────────────┐
│   PRODUCTION OF CO-SELECTIVE     │
│      OXIDATION CATALYST          │
└─────────────────────────────────┘
                │
┌─────────────────────────────────┐
│    PLACE ALUMINA PELLETS         │ ～S100
│     IN DISTILLED WATER           │
└─────────────────────────────────┘
                │
┌─────────────────────────────────┐
│    ADSORB RUTHENIUM SALT         │ ～S110
│     TO ALUMINA PELLETS           │
└─────────────────────────────────┘
                │
┌─────────────────────────────────┐
│    PLACE ALUMINA PELLETS         │ ～S120
│     IN DISTILLED WATER           │
└─────────────────────────────────┘
                │
┌─────────────────────────────────┐
│    ADSORB PLATINUM SALT          │ ～S130
│     TO ALUMINA PELLETS           │
└─────────────────────────────────┘
                │
┌─────────────────────────────────┐
│     DRY ALUMINA PELLETS          │ ～S140
└─────────────────────────────────┘
                │
┌─────────────────────────────────┐
│       REDUCE Ru AND Pu           │ ～S150
└─────────────────────────────────┘
                │
┌─────────────────────────────────┐
│       ALLOY Ru AND Pt            │ ～S160
└─────────────────────────────────┘
                │
┌─────────────────────────────────┐
│  COMPLETION OF CO-SELECTIVE      │
│      OXIDATION CATALYST          │
└─────────────────────────────────┘
```

**European Patent Office**

# EUROPEAN SEARCH REPORT

Application Number

EP 99 10 6328

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | DATABASE WPI<br>Section Ch, Week 8640<br>Derwent Publications Ltd., London, GB;<br>Class B01, AN 86262586<br>XP002900497<br>& JP 61 191517 A (TOYO ENG. CORP.)<br>* abstract * | 1-9,<br>12-15 | C10K3/04<br>B01D53/62<br>C01B3/00<br>F02B75/10<br>F01N3/10 |
| X | DATABASE WPI<br>Section Ch, Week 7122<br>Derwent Publications Ltd., London, GB;<br>Class B01, AN 7137554S<br>XP002900498<br>& SU 212 994 A (AZERBAIDZHAN AZIZBEKOV PE)<br>* abstract * | 1 | |
| X | US 3 896 616 A (KEITH ET AL.)<br>29 July 1975 (1975-07-29)<br>* claims * | 1 | |
| X | DE 22 60 685 A (AUGUST)<br>27 June 1974 (1974-06-27)<br>* claims * | 1 | TECHNICAL FIELDS SEARCHED (Int.Cl.6)<br><br>C10K<br>B01D<br>C01B<br>F02B<br>F01N<br>B01J<br>C07C |

The present search report has been drawn up for all claims

| Place of search | Date of completion of the search | Examiner |
|---|---|---|
| VIENNA | 10 June 1999 | PAMMINGER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 99 10 6328

This annex lists the patent family members relating to the patent documents cited in the above-mentioned European search report.
The members are as contained in the European Patent Office EDP file on
The European Patent Office is in no way liable for these particulars which are merely given for the purpose of information.

10-06-1999

| Patent document cited in search report | Publication date | Patent family member(s) | Publication date |
|---|---|---|---|
| JP 61191517 A | 26-08-1986 | NONE | |
| SU 212994 A | | NONE | |
| US 3896616 A | 29-07-1975 | NONE | |
| DE 2260685 A | 27-06-1974 | GB 1384007 A<br>SE 384717 B | 12-02-1974<br>17-05-1976 |

EPO FORM P0459

For more details about this annex : see Official Journal of the European Patent Office, No. 12/82